# EUROPEAN PATENT APPLICATION

(11) **EP 4 635 990 A1**
(43) Date of publication of application: **22.10.2025**
(21) Application number: 23903549.6
(22) Date of filing: 13.12.2023
(51) Int. Cl.: C08F 2/44, C08F 210/02, C08F 214/22, C08F 214/24, C08F 214/26, C08F 216/14, C08F 259/08

(54) **METHOD FOR PRODUCING FLUORINE-CONTAINING POLYMER, AQUEOUS DISPERSION LIQUID, AND PARTICLE**

(30) Priority: 16.12.2022 JP 2022201048
(71) Applicant: AGC INC., Chiyoda-ku, Tokyo 1008405 (JP)
(72) Inventor: SHIBASAKI, Kosuke, Tokyo 100-8405 (JP); TOYODA, Mizuna, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2023/044700
(87) International publication number: WO 2024/128265

(57) **Abstract**

To provide a method for producing a fluorinated polymer, by which a fluorinated polymer can be efficiently produced without requiring an emulsifier, while an aqueous medium with a small environmental impact is used. The method for producing a fluorinated polymer of the present invention is a method for producing a fluorinated polymer, which comprises polymerizing a monomer comprising a fluorinated monomer in an aqueous dispersion containing a first fluorinated polymer having TFE units and PAVE units, and an aqueous medium, to produce a second fluorinated polymer, wherein in the first fluorinated polymer, the units based on a perfluoro(alkyl vinyl ether) is 20 to 60 mol% to the total amount of the units based on tetrafluoroethylene and the units based on a perfluoro(alkyl vinyl ether), the average particle size of the first fluorinated polymer is 1 to 150 nm, and the content of the first fluorinated polymer before start of the polymerization of the monomer is 0.01 to 4.0 mass% to the total mass of the aqueous dispersion.

## Description

### TECHNICAL FIELD

The present invention relates to a method for producing a fluorinated polymer, an aqueous dispersion, and particles.

### BACKGROUND ART

Fluorinated polymers such as ethylene/tetrafluoroethylene copolymers, which are excellent in heat resistance, chemical resistance, flame retardance, weather resistance, etc., are used in various industrial fields.

As a method for producing a fluorinated polymer, a method of emulsion-polymerizing a fluorinated monomer in an aqueous medium using a fluorinated emulsifier may be mentioned (Patent Document 1).

### PRIOR ART DOCUMENTS

### PATENT DOCUMENTS

Patent Document 1: WO2007/046377

### DISCLOSURE OF INVENTION

### TECHNICAL PROBLEM

The method for producing a fluorinated polymer in Patent Document 1, which uses an aqueous medium, has a small environmental impact, however, if the emulsifier as an essential component remains in a large amount in the aqueous dispersion obtained by polymerization, removal of the emulsifier is necessary depending upon the application.

An object of the present invention is to provide a method for producing a fluorinated polymer, by which a fluorinated polymer can be efficiently produced without requiring an emulsifier, while an aqueous medium with a small environmental impact is used.

Another object of the present invention is to provide an aqueous dispersion and particles.

### SOLUTION TO PROBLEM

The present inventors have conducted extensive studies and as a result found that the above objects can be achieved by the following constitution.
[1] A method for producing a fluorinated polymer, which comprises polymerizing a monomer comprising a fluorinated monomer in an aqueous dispersion containing a first fluorinated polymer having units based on tetrafluoroethylene and units based on a perfluoro(alkyl vinyl ether), and an aqueous medium, to produce a second fluorinated polymer that is different from the first fluorinated polymer, wherein
   in the first fluorinated polymer, the proportion of the units based on a perfluoro(alkyl vinyl ether) is 20 to 60 mol% to the total amount of the units based on tetrafluoroethylene and the units based on a perfluoro(alkyl vinyl ether),
   the average particle size of the first fluorinated polymer is 1 to 150 nm, and
   the content of the first fluorinated polymer before start of the polymerization of the monomer, is 0.01 to 4.0 mass% to the total mass of the aqueous dispersion.
[2] The method for producing a fluorinated polymer according to [1], wherein before start of the polymerization of the monomer, the concentration of sulfate ions is 5 mass ppm or less to the total mass of the aqueous medium in the aqueous dispersion.
[3] The method for producing a fluorinated polymer according to [1] or [2], wherein the fluorinated monomer comprises at least one member selected from the group consisting of tetrafluoroethylene, chlorotrifluoroethylene and vinylidene fluoride.
[4] The method for producing a fluorinated polymer according to any one of [1] to [3], wherein the monomer comprises ethylene.
[5] The method for producing a fluorinated polymer according to any one of [1] to [4], wherein the amount of the monomer used is 1 to 50 parts by mass per 100 parts by mass of the aqueous medium used.
[6] The method for producing a fluorinated polymer according to any one of [1] to [5], wherein the monomer is polymerized in the presence of a polymerization initiator.
[7] An aqueous dispersion containing an aqueous medium and particles containing a fluorinated polymer, wherein
   the average particle size of the particles is 1 µm or less,
   the particles have units based on a perfluoro(alkyl vinyl ether), and the content of the units based on a perfluoro(alkyl vinyl ether) is 0.1 to 1.0 mol% to all units of the fluorinated polymer, and
   the content of a compound represented by the formula (S1) and the content of a compound represented by the formula (S2) are each 100 mass ppb or less to the total mass of the particles:

      formula (S1): H-(CF₂)ₙ-COOM

      formula (S2): H-(CF₂)ₙ-SO₃M
   in the formula (S1) and the formula (S2), M is each independently a hydrogen atom, Na, K or NH₄, and n is each independently 8 or 10.
[8] The aqueous dispersion according to [7], wherein the particles have at least one type of units selected from the group consisting of units based on tetrafluoroethylene, units based on chlorotrifluoroethylene and units based on vinylidene fluoride.
[9] The aqueous dispersion according to [7] or [8], wherein the particles have units based on ethylene.
[10] Particles containing a fluorinated polymer, wherein
   the average particle size of the particles is 1 µm or less,
   the particles have units based on tetrafluoroethylene, units based on ethylene and units based on a perfluoro(alkyl vinyl ether),
   the proportion of the units based on ethylene is 20 to 70 mol% to the total amount of the units based on tetrafluoroethylene and the units based on ethylene,
   the total content of the units based on tetrafluoroethylene and the units based on ethylene is 80 mol% or more to all units of the fluorinated polymer,
   the content of the units based on a perfluoro(alkyl vinyl ether) is 0.1 to 1.0 mol% to all units of the fluorinated polymer, and
   the content of a compound represented by the formula (S1) and the content of a compound represented by the formula (S2) are each 100 mass ppb or less to the total mass of the particles:

      formula (S1): H-(CF₂)ₙ-COOM

      formula (S2): H-(CF₂)ₙ-SO₃M
   in the formula (S1) and the formula (S2), M is each independently a hydrogen atom, Na, K or NH₄, and n is each independently 8 or 10.

### ADVANTAGEOUS EFFECTS OF INVENTION

According to the present invention, it is possible to provide a method for producing a fluorinated polymer, by which a fluorinated polymer can be efficiently produced without requiring an emulsifier, while an aqueous medium with a small environmental impact is used.

Further, according to the present invention, it is possible to provide an aqueous dispersion and particles.

### DESCRIPTION OF EMBODIMENTS

Meanings of terms in the present invention are as follows.

" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% of mol%) of each units based on all units which a polymer has, is obtained by analyzing the polymer by nuclear magnetic resonance spectroscopy (NMR). Usually, the content of each units calculated from the amount of charge of each monomer, substantially agrees with the actual content of each units.

### [Method for producing fluorinated polymer]

In the method for producing a fluorinated polymer of the present invention (hereinafter sometimes referred to as "present production method") is a method which comprises polymerizing a monomer comprising a fluorinated monomer (hereinafter sometimes referred to as "specific monomer") in an aqueous dispersion containing a first fluorinated polymer having units based on tetrafluoroethylene and units based on a perfluoro(alkyl vinyl ether), and an aqueous medium (hereinafter the aqueous dispersion used in the present production method may sometimes be referred to as "aqueous dispersion (a)") to produce a second fluorinated polymer that is different from the first fluorinated polymer.

In the present production method, in the first fluorinated polymer, the proportion of the units based on a perfluoro(alkyl vinyl ether) is 20 to 60 mol% to the total amount of the units based on tetrafluoroethylene and the units based on a perfluoro(alkyl vinyl ether).

In the present production method, the average particle size of the first fluorinated polymer is 1 to 150 nm.

Further, in the present production method, the content of the first fluorinated polymer before start of the polymerization of the monomer, is 0.01 to 4.0 mass% to the total mass of the aqueous dispersion (a).

The reason as to why the second fluorinated polymer can be efficiently produced without requiring an emulsifier by the present production method, is estimated that the first fluorinated polymer functions as a favorable polymerization site for the second fluorinated polymer by using an aqueous dispersion containing a predetermined amount of the first fluorinated polymer with the average particle size and the proportion of its units being within predetermined ranges.

### <Aqueous dispersion>

In the present production method, the aqueous dispersion (a) containing the first fluorinated polymer and the aqueous medium is used.

### (First fluorinated polymer)

The first fluorinated polymer has units based on tetrafluoroethylene (hereinafter sometimes referred to as "TFE") and units based on a perfluoro(alkyl vinyl ether) (hereinafter sometimes referred to as "PAVE").

It is estimated that the first fluorinated polymer adsorbs and includes the specific monomer at the hydrophobic moiety at the time of polymerization of the specific monomer to solubilize the specific monomer, and the specific monomer is polymerized inside specific particles by addition of the polymerization initiator. It is also estimated that the first fluorinated polymer contributes to dispersion-stability in the aqueous medium and in an organic solvent.

PAVE is preferably a monomer represented by the formula (1), whereby excellent polymerizability in production of the first fluorinated polymer is achieved, and the second fluorinated polymer can be produced more efficiently.

CF₂=CF-O-R^{f1} (1)

In the formula (1), R^{f1} is a C₁₋₁₀ perfluoroalkyl group. The number of carbon atoms in R^{f1} is preferably 1 to 8 in view of more excellent polymerizability, more preferably 1 to 6, further preferably 1 to 5, particularly preferably 1 to 3.

The perfluoroalkyl group may be linear or may be branched.

Specific examples of PAVE include perfluoro(methyl vinyl ether) (hereinafter sometimes referred to as "PMVE"), perfluoro(ethyl vinyl ether) (hereinafter sometimes referred to as "PEVE") and perfluoro(propyl vinyl ether) (hereinafter sometimes referred to as "PPVE"), and among them, preferred are PMVE and PPVE, whereby the second fluorinated polymer can be produced more efficiently, and more preferred is PMVE.

In the first fluorinated polymer, the proportion of the PAVE units to the total amount of the TFE units and the PAVE units is 20 to 60 mol%, and preferably 25 to 60 mol%, more preferably 30 to 55 mol%, whereby the second fluorinated polymer can be produced more efficiently.

The first fluorinated polymer may have units based on a monomer other than TFE and PAVE, however, it preferably has substantially no units based on other monomer, whereby the second fluorinated polymer can be produced more efficiently.

"Have substantially no units based on other monomer" means that the content of the units based on other monomer is 0.01 mol% or less to all units of the first fluorinated polymer, more preferably 0 mol%.

In a case where the first fluorinated polymer has the units based on other monomer, the other monomer is preferably hexafluoropropylene.

Before start of the polymerization of the monomer to be polymerized for production of the second fluorinated polymer, the content of the first fluorinated polymer is, to the total mass of the aqueous medium in the aqueous dispersion (a), 0.01 to 4.0 mass%, and preferably 0.01 to 0.6 mass%, more preferably 0.01 to 0.5 mass%, whereby the second fluorinated polymer can be produced more efficiently.

In the present specification, "before start of the polymerization of the monomer to be polymerized for production of the second fluorinated polymer" means immediately before the polymerization start point. The "polymerization start point" may, for example, be a point when the monomer and the polymerization initiator are made to coexist in a reactor after the internal temperature of the reactor reaches the polymerization temperature or higher, and a point when the internal temperature of a reactor reaches the polymerization temperature or higher after the monomer and the polymerization initiator are made to coexist in the reactor.

Before start of the polymerization of the monomer to be polymerized for production of the second fluorinated polymer, the concentration of sulfate ions is, to the total mass of the aqueous medium in the aqueous dispersion (a), preferably 10 mass ppm or less, whereby coloring of the second fluorinated polymer will be suppressed, more preferably 5 mass ppm or less. The lower limit may be 0 mass ppm.

As an example of a method to adjust the concentration of sulfate ions to be the above value, a method of removing sulfate ions by an anion exchange resin at the time of production of the first fluorinated polymer may be mentioned.

The sulfate ions are derived, for example, from the polymerization initiator (particularly ammonium persulfate) used at the time of production of the first fluorinated polymer, and may sometimes be included in the aqueous dispersion (a) containing the first fluorinated polymer. It is estimated that by the sulfate ion content being 10 mass ppm or less (particularly 5 mass ppm or less), formation of terminal groups with low heat resistance in the second fluorinated polymer can be suppressed and as a result, coloring of the second fluorinated polymer is suppressed.

The first fluorinated polymer is dispersed in the form of particles in the aqueous medium.

The average particle size of the first fluorinated polymer is 1 to 150 nm, and preferably 10 to 120 nm, more preferably 50 to 120 nm, whereby the second fluorinated polymer can be produced more efficiently.

The average particle size of the first fluorinated polymer is a particle size calculated by analyzing the autocorrelation function acquired by dynamic light scattering, by monodisperse cumulant method.

The method for producing the first fluorinated polymer is preferably a method of polymerizing the monomer comprising TFE and PAVE in the aqueous medium in the presence of the polymerization initiator. By such a method, the first fluorinated polymer dispersed in the form of particles in the aqueous medium can be obtained.

The aqueous medium having particles of the first fluorinated polymer dispersed thus obtained may be used as it is as the aqueous dispersion (a), or may further be mixed with another aqueous medium and used as the aqueous dispersion (a). Otherwise, the first fluorinated polymer may be dispersed in another aqueous medium by solvent replacement, and the dispersion may be used as the aqueous dispersion (a). It is preferred that sulfate ions are removed from the aqueous dispersion (a) by a sulfate ion removal means such as an anion exchange resin.

The polymerization initiator used for production of the first fluorinated polymer is preferably a water-soluble polymerization initiator, more preferably a persulfate such as ammonium persulfate, sodium persulfate or potassium persulfate, or an organic polymerization initiator such as disuccinic peroxide or azobisisobutylamidine dihydrochloride, more preferably a persulfate, particularly preferably ammonium persulfate.

The aqueous medium used for production of the first fluorinated polymer may be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

### (Aqueous medium)

The aqueous dispersion (a) used in the present production method contains an aqueous medium. The aqueous medium contained in the aqueous dispersion (a) may be the polymerization solvent used at the time of production of the first fluorinated polymer, as described above.

Specific examples of the aqueous medium contained in the aqueous dispersion (a) are the same as the specific examples of the aqueous medium used for production of the first fluorinated polymer.

Before start of the polymerization of the monomer to be polymerized for production of the second fluorinated polymer, the content of the aqueous medium is, to the total mass of the aqueous dispersion (a), preferably 60 to 99.9 mass%, more preferably 96 to 99.9 mass%, further preferably 98 to 99.9 mass%.

### (Other component)

The aqueous dispersion (a) used in the present production method may contain a component other than the first fluorinated polymer and the aqueous medium.

Specific examples of the other component which the aqueous dispersion (a) may contain, include a chain transfer agent, an emulsifier and a pH adjusting agent.

Specific examples of the chain transfer agent include ethyl acetate, methanol, ethanol, t-butyl methyl ether, diether ether, n-pentane, cyclohexane, methane and propane.

Specific examples of the emulsifier include a fluorinated emulsifier such as CF₃CF₂-O-CF₂CF₂-O-CF₂COONH₄ and CF₃CF₂CF₂OCF(CF₃)COOH, sodium lauryl sulfate, PELEX SS-H manufactured by Kao Chemicals, and Newcol 1305-SN manufactured by NIPPON NYUKAZAI CO., LTD.

Specific examples of the pH adjusting agent include an inorganic salt. Specific examples of the inorganic salt include a phosphate such as disodium hydrogenphosphate and sodium dihydrogen phosphate, sodium hydrogen carbonate, and a carbonate such as sodium carbonate. More preferred examples of the phosphate include disodium hydrogenphosphate dihydrate and disodium hydrogenphosphate dodecahydrate.

In a case where the aqueous dispersion (a) contains the chain transfer agent, the content of the chain transfer agent is preferably 0.1 to 5 parts by mass per 100 parts by mass of the aqueous medium. The amount of the chain transfer agent used is preferably 0.1 to 20 parts by mass, more preferably 0.1 to 15 parts by mass, further preferably 0.1 to 10 parts by mass, per 100 parts by mass of the specific monomer described later used.

In a case where the aqueous dispersion (a) contains the emulsifier, the content of the emulsifier is preferably 0.01 to 5 parts by mass per 100 parts by mass of the aqueous medium.

In a case where the aqueous dispersion (a) contains the pH adjusting agent, the content of the pH adjusting agent is preferably 0.01 to 3.0 parts by mass per 100 parts by mass of the aqueous medium.

Before start of the polymerization of the monomer to be polymerized for production of the second fluorinated polymer, the concentration of fluoride ions is, to the total mass of the aqueous dispersion (a), in view of polymerization stability, preferably 100 mass ppm or less, more preferably 50 mass ppm or less. The lower limit may be 0 mass ppm.

As an example of the method to adjust the concentration of fluoride ions to be the above value, a method of removing sulfate ions by using an anion exchange resin at the time of production of the first fluorinated polymer may be mentioned.

The fluoride ions are generated by the reaction of the polymerization initiator (for example ammonium persulfate) with the fluorinated monomer and may sometimes be included in the aqueous dispersion.

### <Specific monomer>

The specific monomer comprises the fluorinated monomer.

The fluorinated monomer preferably comprises at least one member selected from the group consisting of TFE, chlorotrifluoroethylene (hereinafter sometimes referred to as "CTFE") and vinylidene fluoride (hereinafter sometimes referred to as "VdF"), more preferably comprises at least one member selected from the group consisting of TFE, CTFE and VdF (hereinafter sometimes referred to as "specific fluorinated monomer"), more preferably comprises TFE, and particularly preferably is TFE.

The fluorinated monomer may be used in combination of two or more.

The amount of the fluorinated monomer used is, to the amount of the specific monomer used, preferably 10.0 to 100.0 mol%, more preferably 30.0 to 70.0 mol%, further preferably 40.0 to 60.0 mol%.

Further, it is also preferred that a fluorinated monomer other than the specific fluorinated monomer (hereinafter sometimes referred to as "other fluorinated monomer") is contained. Specific examples of the other fluorinated monomer include a fluoroalkylethylene (hereinafter sometimes referred to as "FAE"), PAVE and hexafluoropropylene. Such other fluorinated monomer may be used in combination of two or more.

Specific examples of FAE include CH₂=CH(CF₂)₂F, CH₂=CH(CF₂)₃F, CH₂=CH(CF₂)₄F (hereinafter sometimes referred to as "C4OLF"), CH₂=CF(CF₂)₃H and CH₂=CF(CF₂)₄H, and preferred is C4OLF.

PAVE is the same as PAVE for the above-described first fluorinated polymer, and preferred embodiments are also the same.

The amount of the other fluorinated monomer used is, to the amount of the specific monomer used, preferably 0.1 to 30.0 mol%, more preferably 0.1 to 10.0 mol%, further preferably 0.5 to 5.0 mol%.

The specific monomer preferably contains a monomer other than the fluorinated monomer (hereinafter sometimes referred to as "other monomer"). Specific examples of the other monomer include ethylene, propylene, vinyl chloride and vinylidene chloride, among them, the other monomer preferably comprises ethylene, and the other monomer is more preferably ethylene.

The other monomer may be used in combination of two or more.

The amount of the other monomer used is, to the amount of the specific monomer used, preferably 10.0 to 70.0 mol%, more preferably 20.0 to 60.0 mol%, further preferably 30.0 to 50.0 mol%.

The amount of the specific monomer used is preferably 1 to 50 parts by mass, more preferably 1 to 40 parts by mass, further preferably 1 to 30 parts by mass, per 100 parts by mass of the aqueous medium used, contained in the aqueous dispersion (a).

### <Polymerization initiator>

In the present production method, the specific monomer is polymerized preferably in the presence of a polymerization initiator.

The polymerization initiator is preferably an oil-soluble radical polymerization initiator, a water-soluble radical initiator or a water-soluble redox catalyst.

Specific examples of the oil-soluble radical initiator include an oil-soluble organic peroxide such as tert-butyl peroxypivalate (hereinafter sometimes referred to as "PBPV") and diisopropyl peroxydicarbonate (hereinafter sometimes referred to as "IPP").

Specific examples of the water-soluble radical initiator include a persulfate such as ammonium persulfate and potassium persulfate, and a water-soluble organic peroxide such as disuccinic peroxide, bisglutaric peroxide and tert-butyl hydroperoxide (hereinafter sometimes referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, with a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt may be a combination of a sulfate anion, a sulfite anion or a chloride anion with a metal ion. The metal ion is preferably a transition metal ion, a manganese, iron, cobalt, nickel, copper, zinc, cerium or silver ion may be mentioned, and an iron ion is preferred. The inorganic salt is preferably iron(II) sulfate.

The polymerization initiator is preferably the oil-soluble radical initiator or the water-soluble radical initiator, and with a view to efficiently producing the fluorinated polymer, more preferably the oil-soluble radical initiator, further preferably the oil-soluble organic peroxide.

The polymerization initiator may be used in combination of two or more.

The amount of the polymerization initiator used is preferably 0.01 to 5 parts by mass, more preferably 0.01 to 3 parts by mass, further preferably 0.01 to 2 parts by mass per 100 parts by mass of the specific monomer used.

### <Other component>

At the time of polymerization of the specific monomer, a component other than the above (hereinafter sometimes referred to as "other component") may further be used. Specific examples of the other component include a reducing agent.

The amount of the other component used is preferably 0.1 to 2 parts by mass per 100 parts by mass of the specific monomer used.

### <Steps>

In the present production method, the specific monomer is polymerized in the aqueous dispersion (a) to produce the second fluorinated polymer.

The second fluorinated polymer obtained by the present production method has units based on the fluorinated monomer (hereinafter sometimes referred to as "fluorinated units"), preferably has the fluorinated units and the units based on the other monomer (hereinafter sometimes referred to as "other units"), and preferably comprises a copolymer of TFE and ethylene (hereinafter sometimes referred to as "ETFE").

The first fluorinated polymer and the second fluorinated polymer may be copolymerized.

ETFE has the TFE units and units based on ethylene (hereinafter sometimes referred to as "E units"). In the copolymer having the TFE units and the E units, the proportion of the E units to the total amount of the E units and the TFE units is preferably 20 to 70 mol%, more preferably 25 to 60 mol%, further preferably 35 to 55 mol%.

The proportion of the total amount of the E units and the TFE units to all units constituting ETFE is preferably 80 mol% or more, more preferably 85 mol% or more, further preferably 90 mol% or more, and preferably 100 mol% or less, more preferably 99.5 mol% or less, further preferably 99 mol% or less.

The specific monomer is charged into a reaction system (that is a polymerization reactor) by a conventional method. For example, the specific monomer may be charged into the reaction system continuously or intermittently so as to keep a predetermined polymerization pressure. Otherwise, the specific monomer may be dissolved in the aqueous medium and the obtained solution is continuously or intermittently charged into the reaction system.

In a case where the polymerization initiator is used, the polymerization initiator may be added to the reaction system all at once or dividedly.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch treatment.

The polymerization of the specific monomer is conducted preferably substantially in the absence of the emulsifier.

The emulsifier may be a known emulsifier, and a known surfactant may be mentioned.

"Substantially in the absence of the emulsifier" means an environment in which the content of the emulsifier is 0.03 mass ppm or less to the total mass of the aqueous medium contained in the aqueous dispersion (a), preferably 0.02 mass ppm or less, more preferably 0 mass ppm.

As described above, it is estimated that the specific monomer is polymerized inside the particles of the first fluorinated polymer at the time of polymerization of the specific monomer, and thus in the present production method, it is considered that particles containing the first fluorinated polymer and the second fluorinated polymer are formed. That is, it is estimated that according to the present production method, the second fluorinated polymer is obtained in the form of particles containing the first fluorinated polymer and the second fluorinated polymer. In such a case, by the present production method, the aqueous dispersion (a) in which the particles containing the first fluorinated polymer and the second fluorinated polymer are dispersed in the aqueous medium is obtained.

### [Aqueous dispersion]

The aqueous dispersion of the present invention (hereinafter sometimes referred to as "present aqueous dispersion") is an aqueous dispersion containing the aqueous medium and particles containing the fluorinated polymer (hereinafter sometimes referred to as "specific particles").

In the present aqueous dispersion, the average particle size of the specific particles is 1 µm or less.

In the present aqueous dispersion, the specific particles have the PAVE units, and the content of the PAVE units is 0.1 to 1.0 mol% to all units of the fluorinated polymer.

Further, in the present aqueous dispersion, the content of the compound represented by the formula (S1) described later and the content of the compound represented by the formula (S2) described later are each 100 mass ppb or less to the total mass of the specific particles.

### <Specific particles>

The present aqueous dispersion will readily be obtained by the present production method. Thus, the specific particles contained in the present aqueous dispersion are preferably particles containing the first fluorinated polymer and the second fluorinated polymer. In such a case, the fluorinated polymer contained in the specific particles comprises two types of the fluorinated polymer, that is the first fluorinated polymer and the second fluorinated polymer.

The specific particles has the PAVE units. The details of the PAVE units are the same as those of the PAVE units in the first fluorinated polymer, and preferred embodiments are also the same.

The content of the PAVE units in the specific particles is, to all units of the fluorinated polymer contained in the specific particles, 0.1 to 1.0 mol%, preferably 0.1 to 0.9 mol%, more preferably 0.1 to 0.8 mol%.

When the content of the PAVE units is 0.1 mol% or more, more excellent polymerization stability will be achieved. When the content of the PAVE units is 1.0 mol% or less, more excellent mechanical properties will be achieved.

In this specification, in a case where the specific particles contain only one type of the fluorinated polymer, "all units of the fluorinated polymer" means all units in the one type of the fluorinated polymer. In a case where the specific particles contain two or more types of the fluorinated polymer, "all units of the fluorinated polymer" means all units in the two or more types of the fluorinated polymer.

The specific particles preferably have the PAVE units and units based on the fluorinated monomer other than the PAVE units (that is the above fluorinated units), more preferably have the PAVE units and at least one type of units selected from the group consisting of the TFE units, the CTFE units and VdF units, further preferably have the PAVE units and the TFE units.

In a case where the specific particles have the fluorinated units other than the PAVE units, the content of the fluorinated units other than the PAVE units is, to all units of the fluorinated polymer contained in the specific particles, preferably 30 to 70 mol%, more preferably 40 to 60 mol%, further preferably 45 to 60 mol%.

The specific particles preferably have units based on the other monomer (that is the other units), more preferably have the E units.

In a case where the specific particles have the other units, the content of the other units is, to all units of the fluorinated polymer contained in the specific particles, preferably 30 to 70 mol%, more preferably 40 to 60 mol%, further preferably 40 to 55 mol%.

A preferred embodiment of the specific particles is an embodiment in which the specific particles have the PAVE units, the fluorinated units other than the PAVE units, and the other units, and a more preferred embodiment is an embodiment in which the specific particles have the PAVE units, the TFE units and the E units.

The PAVE units, the fluorinated units other than the PAVE units and the other units contained in the specific particles are preferably contained in the fluorinated polymer in the specific particles.

The content of the specific particles is, to the total mass of the present aqueous dispersion, in view of dispersion stability of the specific particles, preferably 1 to 50 mass%, more preferably 1 to 40 mass%, further preferably 1 to 30 mass%.

The average particle size of the specific particles is 1 µm or less, and in view of dispersion stability of the specific particles, preferably 500 nm or less, more preferably 400 nm or less.

The average particle size of the specific particles is, in view of agglomeration properties, preferably 50 nm or more, more preferably 70 nm or more, further preferably 100 nm or more.

The average particle size of the specific particles is a particle size calculated by analyzing the autocorrelation function acquired by dynamic light scattering, by monodisperse cumulant method.

### <Aqueous medium>

Specific examples of the aqueous medium contained in the present aqueous dispersion are the same as the specific examples of the aqueous medium used for production of the first fluorinated polymer.

The content of the aqueous medium is, to the total mass of the present aqueous dispersion, in view of dispersion stability of the specific particles, preferably 50 to 99 mass%, more preferably 60 to 99 mass%, further preferably 70 to 99 mass%.

### <Compound represented by formula (S1) and compound represented by formula (S2)>

The compound represented by the formula (S1) and the compound represented by the formula (S2) are components that may be generated when the specific monomer (particularly TFE) is polymerized in the presence of the polymerization initiator, the chain transfer agent and the emulsifier (particularly a hydrocarbon-based emulsifier). Thus, in a case where no emulsifier is used at the time of production of the fluorinated polymer contained in the present aqueous dispersion, the amounts of the compound represented by the formula (S1) and the compound represented by the formula (S2) generated can be suppressed, and the contents of such compounds can readily be adjusted to be within the range described later.

Formula (S1): H-(CF₂)ₙ-COOM

Formula (S2): H-(CF₂)ₙ-SO₃M

In the formula (S1) and the formula (S2), M is each independently a hydrogen atom, Na, K or NH₄, and n is each independently 8 or 10.

In the present aqueous dispersion, the content of the compound represented by the formula (S1) and the content of the compound represented by the formula (S2) are each 100 mass ppb or less, preferably 50 mass ppb or less, more preferably 25 mass ppb or less, further preferably 0 mass ppb (that is, the compound represented by the formula (S1) is not contained), to the total mass of the specific particles.

### <Others>

The present aqueous dispersion preferably contains substantially no emulsifier. The emulsifier is as defined above.

In the present aqueous dispersion, "containing substantially no emulsifier" means that the content of the emulsifier is, to the total mass of the present aqueous dispersion, 0.03 mass ppm or less, preferably 0.02 mass ppm or less, more preferably 0 mass ppm.

### <Application>

The present aqueous dispersion does not require the emulsifier, as described above, and thus it can easily be converted to a dispersion of an organic solvent such as N-methylpyrrolidone or acetone by solvent replacement.

For example, the present aqueous dispersion is mixed with an organic solvent and dehydrated by evaporation or over anhydrous sodium sulfate to obtain a dispersion of the organic solvent.

In the present aqueous dispersion, the fluorinated polymer can stably be dispersed, even though no emulsifier is contained. Thus, the present aqueous dispersion can suitably be applied to coatings, binders, etc.

Further, by agglomerating the specific particles from the present aqueous dispersion, a powder of the specific particles can be obtained. The powder of the specific particles obtained by agglomeration may be homogenized e.g. by melt-kneading into a molding material in the form of pellets, particles or the like. The powder of the specific particles obtained by agglomeration may be formed into a molded product e.g. by melt-molding.

The agglomeration method may be freeze agglomeration, acid agglomeration, basic agglomeration or agglomeration by a coagulant, but is not limited thereto.

In the case of freeze agglomeration, the agglomeration temperature is preferably -20 to 0°C. The agglomeration time is preferably 1 hour or more, more preferably 2 hours or more.

In the case of acid agglomeration, preferred is a method of adding a solution containing an acid to the present aqueous dispersion. The acid added may, for example, be hydrochloric acid, nitric acid, sulfuric acid, oxalic acid or hydrofluoric acid, and is preferably hydrochloric acid. The concentration of the acid in the solution containing the acid is preferably 0.1 to 50 mass%, more preferably 1 to 30 mass%, further preferably 1 to 10 mass%.

In the case of basic agglomeration, preferred is a method of adding a solution containing a base to the present aqueous dispersion. The base added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

In the case of agglomeration by a coagulant, a known coagulant may be used. The known coagulant may be an aluminum salt, a calcium salt or a magnesium salt. Specifically, aluminum sulfate, alum represented by the formula M'Al(SO₄)₂·12H₂O wherein M' is a monovalent cation other than lithium, calcium nitrate and magnesium sulfate may be mentioned, alum is preferred, and potassium alum wherein M is potassium is more preferred.

The agglomeration method is preferably basic agglomeration, whereby agglomeration is particularly likely to proceed.

### [Particles]

The particles of the present invention (hereinafter sometimes referred to as "present particles") are particles containing the fluorinated polymer, and the average particle size of the present particles is 1 µm or less.

The present particles have the TFE units, the E units and the PAVE units, the proportion of the E units to the total amount of the TFE units and the E units is 20 to 70 mol%, the total content of the TFE units and the E units is 80 mol% or more to all units of the fluorinated polymer, and the content of the PAVE units is 0.1 to 1.0 mol% to all units of the fluorinated polymer.

In the present particles, the content of the compound represented by the formula (S1) and the content of the compound represented by the formula (S2) are each 100 mass ppb or less to the total mass of the present particles.

The present particles are preferably particles obtained by an agglomeration method using the present aqueous dispersion. Preferred embodiments of the present particles are the same as the preferred embodiments of the specific particles contained in the present aqueous dispersion, and their description is omitted.

The average particle size of the present particles means an arithmetic mean of particle sizes of five different particles in scanning electron microscope images taken by a scanning electron microscope with respect to the present particles obtained after the agglomeration.

### EXAMPLES

Now, the present invention will be described in further detail with reference to Examples. Ex. 1 to 3 are Examples of the present invention, and Ex. 4 and 5 are Comparative Examples. However, it should be understood that the present invention is by no means restricted thereto.

### [Measurement and evaluation methods]

The measurement methods and evaluation methods are as follows.

### <Average particle size of particles in stock solution>

Using the stock solution as a sample, measured by means of a laser diffraction/scattering particle size distribution measuring apparatus (ELSZ manufactured by Otsuka Electronics Co., Ltd.).

The average particle size of particles in the aqueous dispersion corresponding to the stock solution, measured in the same manner as for the stock solution, was the same as the average particle size of the particles in the stock solution.

### <Average particle size of particles after drying>

The particles obtained in each Ex. were dried and agglomerated, and photographed by a scanning electron microscope (for example, JSM-IT700HR InTouchScope manufactured by JEOL Ltd.). Particle sizes of different five particles in the obtained SEM images were measured and their arithmetic mean was taken as the average particle size.

### <Proportion of units in polymer>

The proportion of each units in the polymer was obtained by ¹⁹F-NMR analysis and infrared absorption spectrum.

### <Content of compound represented by formula (S1)>

The content of the compound represented by the formula (S1) to the total mass of the particles in the aqueous dispersion obtained in each Ex. described later, was calculated by the method using an aqueous dispersion among the measurement methods using a liquid chromatography mass spectrometry, described in WO2018/181904, paragraphs [0710] to [0720]. The apparatus used was Agilent 1260 series HPLC/6460S, and the column used was cadenza CD-C18 manufactured by Imtakt.

### <Content of compound represented by formula (S2)>

The content of the compound represented by the formula (S2) to the total mass of the particles in the aqueous dispersion obtained in each Ex. described later, was calculated by the method using an aqueous dispersion among the measurement methods using a liquid chromatography mass spectrometry, described in WO2018/181904, paragraphs [0721] to [0732]. The apparatus used was Agilent 1260 series HPLC/6460S, and the column used was cadenza CD-C18 manufactured by Imtakt.

### <Concentration of sulfate ions>

The concentration of sulfate ions to the total mass of the aqueous medium in the aqueous dispersion was measured as follows. The aqueous dispersion was freeze-agglomerated and subjected to filtration, and the obtained aqueous medium was analyzed by ion chromatography.

For the analysis by ion chromatography, an ion chromatograph ICS-5000 (manufactured by Thermo Fisher Scientific) was used. The separation column used was Dionex IonPac AS-19, the guard column used was Dionex IonPac AG-19, and the eluent used was KOH.

### [Production of stock solution A]

Into a 2.1 L stainless steel pressure resistant reactor, ultrapure water (1162 g), a 28% aqueous NH₃ solution (one drop), PMVE (70 g) and TFE (14 g) were charged and heated to 80°C with stirring at 600 rpm. An aqueous ammonium persulfate solution (5.9 mass%, 5 cc) was added to initiate the polymerization. Since the pressure in the reactor decreased as the polymerization started, TFE was added to keep a constant pressure. Upon injection of 24 g of TFE, the reactor was cooled to terminate the polymerization reaction. The gas remaining in the reactor was recovered, and the liquid in the reactor was withdrawn. This liquid was taken as stock solution A. The stock solution A had particles (average particle size: 110 nm) of fluorinated polymer 1A dispersed in the aqueous medium, and the content of the fluorinated polymer 1A was 3.0 mass% to the total mass of the stock solution A.

The stock solution A was freeze-agglomerated and subjected to filtration, and the obtained fluorinated polymer 1A was washed with ultrapure water and vacuum dried at 100°C. The obtained fluorinated polymer 1A was analyzed by NMR and as a result, PMVE units/TFE units=34.4/65.6 (molar ratio).

### [Production of stock solution B]

Ultrapure water (200 g) was added to the stock solution A (200 g) and stirred at 200 rpm. An ion exchange resin (Purolite A300 (manufactured by Purolite) and an anion exchange resin (4 g) were added thereto and stirred for 20 minutes. Then, the ion exchange resin (2 g) was added every 20 minutes. 60 Minutes after the start of the stirring, the stock solution was separated from the ion exchange resin by filtration to obtain stock solution B. The stock solution B had particles (average particle size: 110 nm) of the fluorinated polymer 1A dispersed in the aqueous medium, and the content of the fluorinated polymer 1A was 1.5 mass% to the total mass of the stock solution B.

### [Production of stock solution C]

Into a 1.3 L stainless steel pressure resistant reactor, ultrapure water (717 g), a 28% aqueous NH₃ solution (one drop), PMVE (63 g) and TFE (10 g) were charged and heated to 80°C with stirring at 500 rpm. An aqueous ammonium persulfate solution (3.6 mass%, 5 cc) was added to initiate the polymerization. Since the pressure in the reactor decreased as the polymerization started, TFE was added to keep a constant pressure. Upon injection of 5 g of TFE, the reactor was cooled to terminate the polymerization reaction. The gas remaining in the reactor was recovered, and the liquid in the reactor was withdrawn. This liquid was taken as stock solution C.

The stock solution C was freeze-agglomerated and subjected to filtration, and the obtained fluorinated polymer 1C was washed with ultrapure water and vacuum dried at 100°C. The obtained fluorinated polymer 1C was analyzed by NMR and as a result, PMVE units/TFE units=47.3/52.7 (molar ratio).

### [Production of stock solution D]

Purolite A300 (manufactured by Purolite, anion exchange resin, 4 g) was added to the stock solution C (200 g) and stirred at 200 rpm for 20 minutes. Then, the ion exchange resin (2 g) was added every 20 minutes. 60 Minutes after the start of the stirring, the stock solution was separated from the ion exchange resin by filtration to obtain stock solution D. The stock solution D had particles (average particle size: 89 nm) of the fluorinated polymer 1C dispersed in the aqueous medium, and the content of the fluorinated polymer 1C was 1.1 mass% to the total mass of the stock solution D.

### [Production of stock solution E]

A stainless steel pressure resistant reactor having an internal capacity of 2100 mL, equipped with an anchor blade, was deaerated, and ultrapure water (1170 g), disodium hydrogenphosphate (10.48 g) and polymethyl methacrylate (37 mg) were charged. While the solution in the reactor was stirred,75 g of PMVE and 14 g of TFE were charged (TFE:PMVE=25:75 (molar ratio)). The internal temperature was raised, and when the internal temperature reached 80°C, the pressure in the reactor was 1.3 MPa (gauge). 5 ml of a solution (20 mass%) having ammonium persulfate dissolved in ultrapure water was added to initiate the polymerization. When the pressure in the reactor decreased to 1.29 MPa (gauge) as the polymerization proceeded, TFE was injected to elevate the pressure in the reactor to 1.3 MPa (gauge). This operation of injecting 7 g of PMVE for every injection of 8 g of TFE was repeatedly carried out. At a point when the total mass of TFE added reached 160 g, addition of the monomers injected after the start of the polymerization (hereinafter sometimes referred to as "delayed-addition monomers") was terminated, the temperature in the reactor was decrease to 10°C to terminate the polymerization reaction, the gas remining in the reactor was recovered, and the liquid was withdrawn. This liquid was taken as stock solution E.

The stock solution E was freeze-agglomerated and subjected to filtration, and the obtained fluorinated polymer 1E was washed with ultrapure water and vacuum dried at 100°C. The obtained fluorinated polymer 1E was analyzed by NMR and as a result, PMVE/TFE=34/66 (molar ratio).

The average particle size of the fluorinated polymer 1E was 290 to 300 nm.

### [Production of stock solution F]

Ultrapure water (180 g) was added to the stock solution E (20 g), and an ion exchange resin (Purolite A300 (manufactured by Purolite), anion exchange resin, 4 g) was added and stirred at 200 rpm for 20 minutes. Then, the ion exchange resin (2 g) was added every 20 minutes. 60 Minutes after the start of the stirring, the stock solution was separated from the ion exchange resin by filtration to obtain stock solution F. The stock solution F had particles (average particle size: 326 nm) of fluorinated polymer 1E dispersed in the aqueous medium, and the content of the fluorinated polymer 1E was 2.0 mass% to the total mass of the stock solution F.

### [Ex. 1]

Into a 1.2 L stainless steel pressure resistant reactor, ultrapure water (428 g), the stock solution B (185 ml), disodium hydrogenphosphate dodecahydrate (0.5 g) and t-BuOH (16.5 g) were charged to obtain aqueous dispersion B. The aqueous dispersion B was heated to 60°C with stirring at 320 rpm. A gas mixture (TFE/ethylene=86/14 (molar ratio)) was injected until the pressure in the reactor reached 2.6 MPaG, and an aqueous TBHP solution (0.2 mass%, 2 ml) and a reducing agent (BRUGGOLITE (registered trademark) FF6M, 0.396 mass%, 2 cc) were added to initiate the polymerization. Since the pressure in the reactor decreased as the polymerization started, a CG gas mixture (TFE/ethylene=54/46 (mol%)) was added to keep a constant pressure. Every 5 minutes after the start of the polymerization, an aqueous TBHP solution (0.2 mass%, 1 cc) and the above reducing agent (1 cc) were added. Upon injection of 80 g of the CG gas mixture, the reactor was cooled to terminate the polymerization reaction. The polymerization time was 167 minutes.

The content of the fluorinated polymer 1A was 0.44 mass% to the total mass of the aqueous dispersion B.

The amount of the monomers (TFE and ethylene) used for the polymerization was 12.3 parts by mass based on the amount of the aqueous medium in the aqueous dispersion B used for the polymerization being 100 parts by mass.

The aqueous dispersion B was freeze-agglomerated and subjected to filtration, and the obtained aqueous medium was analyzed by ion chromatography and as a result, the concentration of sulfate ions was less than 0.1 mass ppm.

The gas remaining in the reactor was recovered, and the liquid was withdrawn. This liquid was taken as aqueous dispersion 1. The aqueous dispersion 1 was a dispersion having particles (average particle size: 196 nm) containing fluorinated polymer 2A dispersed in the aqueous medium, and the solid content concentration was 10.6 mass%.

The obtained particles were agglomerated and dried, and their composition was calculated by NMR and as a result, TFE units/E units/PMVE units=56.3/43.1/0.6 (molar ratio). The average particle size of the particles after drying was 156 nm.

In the aqueous dispersion 1, the contents of the compound represented by the formula (S1) and the compound represented by the formula (S2) were each 100 mass ppb or less, to the total mass of the particles in the aqueous dispersion 1.

### [Ex. 2]

Into a 1.2 L stainless steel pressure resistant reactor, ultrapure water (520.5 g), the stock solution A (92.5 ml), disodium hydrogenphosphate dodecahydrate (0.5 g) and t-BuOH (16.5 g) were charged to obtain aqueous dispersion A. The aqueous dispersion A was heated to 60°C with stirring at 320 rpm. A gas mixture (TFE/ethylene=86/14 (molar ratio)) was injected to the reactor, however, a pressure drop started simultaneously with the injection, and thus at a point when the pressure reached 2.6 MPaG, an aqueous TBHP solution (0.2 mass%, 2ml) and a reducing agent (BRUGGOLITE (registered trademark) FF6M, 0.396 mass%, 2cc) were added to initiate the polymerization. Since the pressure in the reactor decreased as the polymerization started, a CG gas mixture (TFE/ethylene=54/46 (molar ratio)) was added to keep a certain pressure. Every 5 minutes after the start of the polymerization, an aqueous TBHP solution (0.2 mass%, 1 cc) and the reducing agent (1 cc) were added. Upon injection of 80 g of the CG gas mixture, the reactor was cooled to terminate the polymerization reaction. The polymerization time was 181 minutes.

The content of the fluorinated polymer 1A was 0.22 mass% to the total mass of the aqueous dispersion A.

The amount of the monomers (TFE and ethylene) used was 12.7 parts by mass based on the amount of the aqueous medium in the aqueous dispersion A used for the polymerization being 100 parts by mass.

The aqueous dispersion A was freeze-agglomerated and subjected to filtration, and the obtained aqueous medium was analyzed by ion chromatograph and as a result, the concentration of sulfate ions was 8.2 mass ppm.

The gas remaining in the reactor was recovered, and the liquid was withdrawn. This liquid was taken as aqueous dispersion 2. The aqueous dispersion 2 was a dispersion having particles (average particle size: 212 nm) containing fluorinated polymer 2B dispersed in the aqueous medium, and the solid content concentration was 10.2 mass%.

The obtained particles were agglomerated and dried, and their composition was analyzed by NMR and as a result, TFE units/E units/PMVE units=56.9/42.4/0.7 (molar ratio). The average particle size of the particles after drying was 182 nm.

In the aqueous dispersion 2, the contents of the compound represented by the formula (S1) and the compound represented by the formula (S2) were each 100 mass ppb or less to the total mass of the particles in the aqueous dispersion 2.

### [Ex. 3]

Into a 1.2 L stainless steel pressure resistant reactor, ultrapure water (428 g), the stock solution D (185 ml), disodium hydrogenphosphate dodecahydrate (0.5 g) and t-BuOH (16.5 g) were charged to obtain aqueous dispersion D. The aqueous dispersion D was heated to 60°C with stirring at 320 rpm. A gas mixture (TFE/ethylene=86/14 (molar ratio)) was injected until the pressure in the reactor reached 2.6 MPaG, and an aqueous TBHP solution (0.2 mass%, 2 ml) and a reducing agent (BRUGGOLITE (registered trademark) FF6M, 0.396 mass%, 2 cc) were added to initiate the polymerization. Since the pressure in the reactor decreased as the polymerization started, a CG gas mixture (TFE/ethylene=54/46 (molar ratio)) was added to keep a constant pressure. Every 5 minutes after the start of the polymerization, an aqueous TBHP solution (0.2 mass%, 1 cc) and the reducing agent (1 cc) were added. Upon injection of 92 g of the CG gas mixture, the reactor was cooled to terminate the polymerization reaction. The polymerization time was 97 minutes.

The content of the fluorinated polymer 1C was 0.32 mass% to the total mass of the aqueous dispersion D.

The amount of the monomers (TFE and ethylene) used for the polymerization was 14.6 parts by mass based on the amount of the aqueous medium in the aqueous dispersion D used for the polymerization being 100 parts by mass.

The aqueous dispersion D was freeze-agglomerated and subjected to filtration, and the obtained aqueous medium was analyzed by ion chromatography and as a result, the concentration of sulfate ions was less than 0.1 mass ppm.

The gas remaining in the reactor was recovered, and the liquid was withdrawn. This liquid was taken as aqueous dispersion 3. The aqueous dispersion 3 was a dispersion having particles (average particle size: 461 nm) containing fluorinated polymer 2C dispersed in the aqueous medium, and the solid content concentration was 12 mass%.

The obtained particles were agglomerated and dried, and their composition was calculated by NMR and as a result, TFE units/E units/PMVE units=55.9/43.7/0.4 (molar ratio). The average particle size of the particles after drying was 427 nm.

In the aqueous dispersion 3, the contents of the compound represented by the formula (S1) and the compound represented by the formula (S2) were each 100 mass ppb or less, to the total mass of the particles in the aqueous dispersion 3.

### [Ex. 4]

Into a 1.2 L stainless steel pressure resistant reactor, ultrapure water (613 g), disodium hydrogenphosphate dodecahydrate (0.5 g) and t-BuOH (16.5 g) were charged and heated to 60°C with stirring at 320 rpm. A gas mixture (TFE/ethylene=86/14 (molar ratio)) was injected until the pressure in the reactor reached 2.6 MPaG, and an aqueous TBHP solution (0.2 mass%, 2 ml) and a reducing agent (BRUGGOLITE (registered trademark) FF6M, 0.396 mass%, 2 cc) were added to initiate the polymerization. Since the pressure in the reactor decreased as the polymerization started, a CG gas mixture (TFE/ethylene=54/46 (molar ratio)) was added to keep a constant pressure. Every 5 minutes after the start of the polymerization, an aqueous TBHP solution (0.2 mass%, 1 cc) and the reducing agent (1 cc) were added. Upon injection of 92 g of the CG gas mixture, the reactor was cooled to terminate the polymerization reaction. The polymerization time was 340 minutes.

The gas remaining in the reactor was recovered, and the liquid was withdrawn, however, the entire liquid was agglomerated, and an aqueous dispersion having particles of the fluorinated polymer dispersed in the aqueous medium could not been obtained.

### [Ex. 5]

Into a 1.2 L stainless steel pressure resistant reactor, ultrapure water (513 g), the stock solution F (100 ml), disodium hydrogenphosphate dodecahydrate (0.5 g) and t-BuOH (16.5 g) were charged to obtain aqueous dispersion F. The aqueous dispersion F was heated to 60°C with stirring at 320 rpm. A gas mixture (TFE/ethylene=86/14 (molar ratio)) was injected until the pressure in the reactor reached 2.6 MPaG, and an aqueous TBHP solution (0.2 mass%, 2 ml) and a reducing agent (BRUGGOLITE (registered trademark) FF6M, 0.396 mass%, 2 cc) were added to initiate the polymerization. Since the pressure in the reactor decreased as the polymerization started, a CG gas mixture (TFE/ethylene=54/46 (molar ratio)) was added to keep a constant pressure. Every 5 minutes after the start of the polymerization, an aqueous TBHP solution (0.2 mass%, 1 cc) and the above reducing agent (1 cc) were added. Upon injection of 80 g of the CG gas mixture, the reactor was cooled to terminate the polymerization reaction. The polymerization time was 370 minutes.

The content of the fluorinated polymer 1E was 0.32 mass% to the total mass of the aqueous dispersion F.

The aqueous dispersion F was freeze-agglomerated and subjected to filtration, and the obtained aqueous medium was analyzed by ion chromatography and as a result, the concentration of sulfate ions was less than 0.1 mass ppm.

The gas remaining in the reactor was recovered, and the liquid was withdrawn, however, the entire liquid was agglomerated, and an aqueous dispersion having particles of the fluorinated polymer dispersed in the aqueous medium could not been obtained.

### [Evaluation]

### <Coloring>

The particles in each of the aqueous dispersions 1 to 3 in Ex. were agglomerated and dried to obtain an aggregate in each Ex. A sheet with a thickness of 1 mm was prepared from the obtained aggregate, and Y.I. and CIE W were obtained by transmission using a color meter (SM color meter, manufactured by Suga Test Instruments Co, Ltd.). The Y.I. and CIE W values are shown in Table 1.

"Y.I." is an index indicating yellowness, and the higher this value, the more yellowish. "CIE W' is an index indicating whiteness, and the lower this value, the more blackish.

The sheet with a thickness of 1 mm was obtained in such a manner that 2 g of the aggregate was heated at 300°C for 10 minutes and pressed at 300°C under 10 MPa for 5 minutes, followed by cooling.

In Ex. 4 and 5, since the aqueous dispersion was not obtained, the coloring evaluation could not be conducted.

**Table 1**

| | | Ex. 1 | Ex. 2 | Ex. 3 | Ex. 4 | Ex. 5 |
|---|---|---|---|---|---|---|
| Coloring | Y.I. | 19 | 41 | 17 | - | - |
| | CIE W | 86 | 72 | 88 | - | - |

It was found that according to the method for producing a fluorinated polymer of the present invention, while an aqueous medium with a small environmental impact is used, the fluorinated polymer can be efficiently produced without requiring an emulsifier (Ex. 1 to 3).

Further, from comparison of Ex. 1 to 3, when an aqueous dispersion in which the concentration of sulfate ions is 5 mass ppm or less to the total mass of the aqueous medium contained in the aqueous dispersion is used for the polymerization, coloring of the fluorinated polymer can sufficiently be suppressed (Ex. 1 and 3).

Whereas in Ex. 4 and 5, the fluorinated polymer could not efficiently be produced.

The entire disclosure of Japanese Patent Application No. 2022-201048 filed on December 16, 2022 including specification, claims and summary is incorporated herein by reference in its entirety.

## Claims

1. A method for producing a fluorinated polymer, which comprises polymerizing a monomer comprising a fluorinated monomer in an aqueous dispersion containing a first fluorinated polymer having units based on tetrafluoroethylene and units based on a perfluoro(alkyl vinyl ether), and an aqueous medium, to produce a second fluorinated polymer that is different from the first fluorinated polymer, wherein
in the first fluorinated polymer, the proportion of the units based on a perfluoro(alkyl vinyl ether) is 20 to 60 mol% to the total amount of the units based on tetrafluoroethylene and the units based on a perfluoro(alkyl vinyl ether),
the average particle size of the first fluorinated polymer is 1 to 150 nm, and
the content of the first fluorinated polymer before start of the polymerization of the monomer, is 0.01 to 4.0 mass% to the total mass of the aqueous dispersion.

2. The method for producing a fluorinated polymer according to Claim 1, wherein before start of the polymerization of the monomer, the concentration of sulfate ions is 5 mass ppm or less to the total mass of the aqueous medium in the aqueous dispersion.

3. The method for producing a fluorinated polymer according to Claim 1 or 2,
wherein the fluorinated monomer comprises at least one member selected from the group consisting of tetrafluoroethylene, chlorotrifluoroethylene and vinylidene fluoride.

4. The method for producing a fluorinated polymer according to Claim 1 or 2,
wherein the monomer comprises ethylene.

5. The method for producing a fluorinated polymer according to Claim 1 or 2,
wherein the amount of the monomer used is 1 to 50 parts by mass per 100 parts by mass of the aqueous medium used.

6. The method for producing a fluorinated polymer according to Claim 1 or 2,
wherein the monomer is polymerized in the presence of a polymerization initiator.

7. An aqueous dispersion containing an aqueous medium and particles containing a fluorinated polymer, wherein
the average particle size of the particles is 1 µm or less,
the particles have units based on a perfluoro(alkyl vinyl ether), and the content of the units based on a perfluoro(alkyl vinyl ether) is 0.1 to 1.0 mol% to all units of the fluorinated polymer, and
the content of a compound represented by the formula (S1) and the content of a compound represented by the formula (S2) are each 100 mass ppb or less to the total mass of the particles:
formula (S1): H-(CF₂)ₙ-COOM
formula (S2): H-(CF₂)ₙ-SO₃M
in the formula (S1) and the formula (S2), M is each independently a hydrogen atom, Na, K or NH₄, and n is each independently 8 or 10.

8. The aqueous dispersion according to Claim 7, wherein the particles have at least one type of units selected from the group consisting of units based on tetrafluoroethylene, units based on chlorotrifluoroethylene and units based on vinylidene fluoride.

9. The aqueous dispersion according to Claim 7 or 8, wherein the particles have units based on ethylene.

10. Particles containing a fluorinated polymer, wherein
the average particle size of the particles is 1 µm or less,
the particles have units based on tetrafluoroethylene, units based on ethylene and units based on a perfluoro(alkyl vinyl ether),
the proportion of the units based on ethylene is 20 to 70 mol% to the total amount of the units based on tetrafluoroethylene and the units based on ethylene,
the total content of the units based on tetrafluoroethylene and the units based on ethylene is 80 mol% or more to all units of the fluorinated polymer,
the content of the units based on a perfluoro(alkyl vinyl ether) is 0.1 to 1.0 mol% to all units of the fluorinated polymer, and
the content of a compound represented by the formula (S1) and the content of a compound represented by the formula (S2) are each 100 mass ppb or less to the total mass of the particles:
formula (S1): H-(CF₂)ₙ-COOM
formula (S2): H-(CF₂)ₙ-SO₃M
in the formula (S1) and the formula (S2), M is each independently a hydrogen atom, Na, K or NH₄, and n is each independently 8 or 10.
